(19) 

Europäisches
Patentamt
European
Patent Office
Office européen
des brevets

(11)  **EP 1 237 249 B1**

(12)  **EUROPEAN PATENT SPECIFICATION**

(45) Date of publication and mention
of the grant of the patent:
**12.08.2009  Bulletin 2009/33**

(51) Int Cl.:
**H02H 3/40** (2006.01)

(21) Application number: **02004755.1**

(22) Date of filing: **01.03.2002**

(54) **Protection relay**

Schutzrelais

Relais de protection

(84) Designated Contracting States:
**DE SE**

(30) Priority: **02.03.2001  JP 2001057948**

(43) Date of publication of application:
**04.09.2002  Bulletin 2002/36**

(73) Proprietor: **KABUSHIKI KAISHA TOSHIBA**
**Tokyo (JP)**

(72) Inventors:
• **Yasuhiro Kurosawa,**
**Intl. Prop. Div.K.K. Toshiba**
**Tokyo 105-8001 (JP)**

• **Hidenari Amo,**
**Intl. Prop. Div.K.K. Toshiba**
**Tokyo 105-8001 (JP)**
• **Hideyuki Takani,**
**Intl. Prop. Div.K.K. Toshiba**
**Tokyo 105-8001 (JP)**

(74) Representative: **Kramer - Barske - Schmidtchen**
**European Patent Attorneys**
**Landsberger Strasse 300**
**80687 München (DE)**

(56) References cited:
**EP-A- 0 718 949**

**EP 1 237 249 B1**

**Description**

The present invention relates to a protection relay in which an influence of distortion component of fault current generated by a fault in a power system is suppressed.

Generally, a protection relay is used to monitor a power system. A main technical subject of such a protection relay is to reduce an influence of harmonics in fault current and fault voltage generated in a fault in a system contained in a signal inputted from the system.

Particularly because charging capacity of a system is increased in underground power transmission cable, phase modifying capacitor and the like, the order of generated harmonics tends to be lowered.

Thus, if it is intended to secure a desired damping amount according to a conventional method for damping the harmonic component with a digital filter, filter delay time needs to be prolonged, so that relay operation time is delayed.

For the reason, an approximation method, which is not affected by harmonic theoretically even if such harmonics is contained has been employed in recent years.

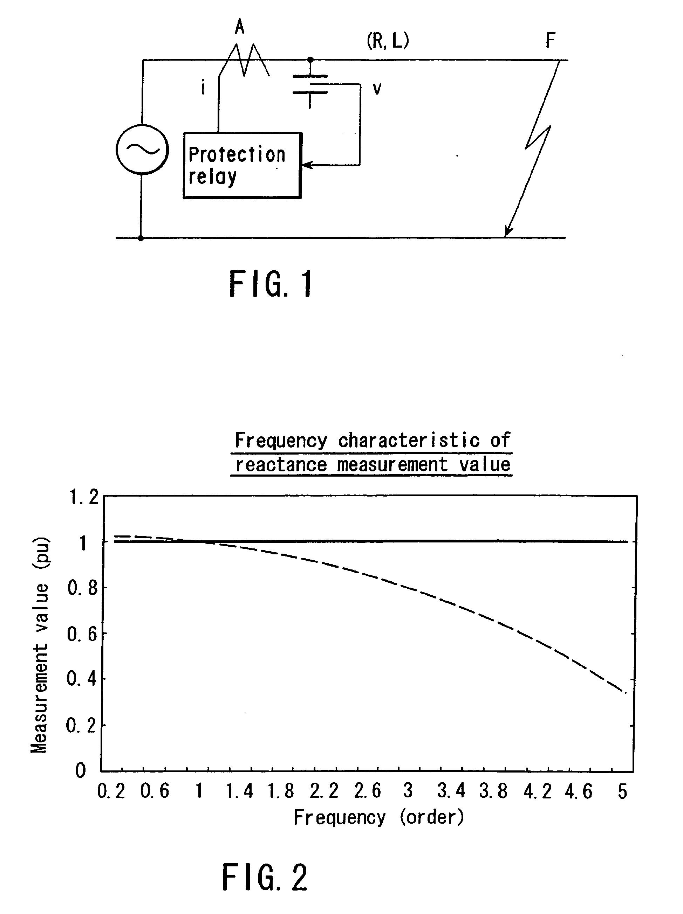

An example of such approximation method will be described with reference to FIG. 1. Power transmission impedance constant up to a fault point F will be considered with reference to FIG. 1. Voltage and current of a protection relay installation point A are assumed to be v and i when resistance is R and inductance is L. If it is assumed that the voltage at the faultal point F is zero, differential equation of a power transmission line 2 can be expressed in an expression (1).

$$V = R \cdot I + L \cdot (di/dt) \qquad \cdots (1)$$

By calculating a differential item (di/dt) of the expression (1) approximately, detection accuracy can be improved even if harmonic is not removed with a filter. An example of a concrete method for digital calculation actually adapted is shown below.

$$v_m + v_{m-1} = R \cdot (i_m + i_{m-1}) + L \cdot (i_m - i_{m-1})$$
$$v_{m-1} + v_{m-2} = R \cdot (i_{m-1} + i_{m-2}) + L \cdot (i_{m-1} - i_{m-2}) \qquad \cdots (2)$$

When a reactance value X (= $\omega_0 \cdot$ L) is calculated from the expression (2), the inductance is expressed in expression (3).

$$L_m = X_m / \omega_0 =$$
$$\frac{(v_m + v_{m-1}) \cdot (i_{m-1} + i_{m-2}) - (v_{m-1} + v_{m-2}) \cdot (i_m + i_{m-1})}{(i_m - i_{m-1}) \cdot (i_{m-1} + i_{m-2}) - (i_{m-1} - i_{m-2}) \cdot (i_m + i_{m-1})}$$
$$\cdots (3)$$

$L_m$/L (true value) is as expressed in the expression (4) under conditions of the expressions (5) and (6), so that frequency characteristic of $X_m$/X (true value) is as indicated with the dotted curve of FIG. 2.

$$L_m/L(true\ value) = \tan(\omega_0 T/2)/\tan(\omega T/2) \qquad \cdots (4)$$

Where,

$$i_m = I\sin(\omega t_m), \quad v_m = V\sin(\omega t + \theta)$$
$$i_m - i_{m-1} = 2I\sin(\omega T/2)\cos(\omega t_m - \omega T/2) \qquad \cdots (5)$$

$$v_m + v_{m-1} = 2V\cos(\omega T/2)\sin(\omega t_m - \omega T/2 + \theta) \qquad \cdots (6)$$

2

Therefore, frequency characteristic of $X_m/X$ (true value) is as indicated with the dotted curve of FIG. 2.

In FIG. 2, its abscissa axis indicates frequency (order) and its ordinate axis indicates a reactance measurement value when basic frequency of system electrical quantity is 50 Hz. Further, in FIG. 2, its dotted curve indicates a case of sampling at 600 Hz and its solid line indicates a case of sampling at 4800 Hz.

As indicated in FIG. 2, the value of $L_m/L$ (true value) decreases below 1 as the frequency departs from its fundamental wave. FIG. 2 indicates that the value of $(\omega T/2)$ only should be suppressed to substantially 1 (that is, the sampling period should be set small) when this value $(L_m/L)$ is near twice or three times the fundamental wave.

Frequency characteristic when the sampling frequency is actually multiplied eight times is indicated by the solid line of FIG. 2. Quantitavely, the relation between an approximate amount $(i_m - i_{m-1})$ of the differential item and a differentiated amount $(v_m + v_{m-1})$ is indicated by the expressions (7) and (8). Therefore, if the sampling frequency is raised (the period is decreased), approximation accuracy of the differential item can be raised.

$$\sin(\omega T/2) = \omega T/2、\ \cos(\omega T/2) = 1$$
$$i_m - i_{m-1} = 2I \cdot \sin(\omega T/2) \cdot \cos(\omega t_m - \omega T/2)$$
$$= 2I \cdot \omega T/2 \cdot \cos(\omega t_m - \omega T/2) \qquad \cdots (7)$$

$$v_m + v_{m-1} = 2V \cdot \cos(\omega T/2) \cdot \sin(\omega t_m - \omega T/2 + \theta)$$
$$= 2V \cdot \sin(\omega t_m - \omega T/2 + \theta) \qquad \cdots (8)$$

However, the value of the expression (7) is a very small value with respect to an amplitude value I. Therefore, a relative value of noise (quantization error generated at the time of A/D conversion, white noise generated in an analog circuit) contained in sampling data $(i_m, i_{m-1})$ is increased thereby disabling practical use of this method.

For example, when the sampling period T is T = 1/4800 sec, $\omega_0 = 2\pi \cdot 50$ Hz, the second item $\varepsilon/(\omega 0T/2)$ on the right side of the expression (9) is amplified to about 30 times. An $\varepsilon$ in the expression (9) is noise error.

$$(i_m - i_{m-1}) / (\omega_0 T/2)$$
$$= 2I \cdot (\omega / \omega_0) \cdot \cos(\omega t_m - \omega T/2) + \varepsilon / (\omega_0 T/2) \qquad \cdots (9)$$

EP 0 718 949 discloses a protection relay for determining whether or not a fault point of a power system exists in a predetermined range by using a trapezoidal integration approximation algorithm which can improve the accuracy by the fast sampling to the protective relay.

An object of the present invention is to provide an improved protection relay.

A protection relay for determining whether or not a faultal point of a power system exists in a predetermined range, according to a first aspect of the present invention which is disclosed in claim 1.

A protection relay for determining whether or not a faultal point of a power system exists in a predetermined range, according to a second aspect of the present invention which is disclosed in claim 7.

A protection relay for determining whether or not a faultal point of power system exists in a predetermined range, according to a third aspect of the present invention which is disclosed in claim 9.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a power system diagram, which is an object of the present invention;

FIG. 2 is a diagram showing frequency characteristic of a reactance measurement value which is an object of the present invention;

FIG. 3 is a diagram showing frequency characteristic of a reactance measurement value in a digital filter structure, which is an object of the present invention;

FIG. 4 is a block diagram of a protection relay according to a first embodiment of the present invention;

FIG. 5 is a block diagram of a protection relay according to a first modification of the first embodiment;

FIG. 6 is a diagram showing reactance characteristic on an impedance plane;

FIG. 7 is a block diagram of a protection relay according to a second modification of the first embodiment;

FIG. 8 is a block diagram of a protection relay according to a third modification of the first embodiment;
FIG. 9 is a diagram showing Ohm characteristic on an impedance plane:
FIG. 10 is a block diagram of a protection relay according to a second embodiment of the present invention;
FIG. 11 is a diagram showing offset mho characteristic on an impedance plane;
FIG. 12 is a block diagram of a protection relay according to a third embodiment of the present invention;
FIG. 13 is a diagram showing the relation between maximum sensitive angle of mho characteristic and permanent impedance;
FIG. 14 is a diagram showing mho characteristic expressed with reference to current;
FIG. 15 is a block diagram of a protection relay according to a first modification of the third embodiment;
FIG. 16 is a block diagram of a protection relay according to a second modification of the third embodiment;
FIG. 17 is a block diagram of a protection relay according to a fourth embodiment of the present invention; and
FIG. 18 is a diagram for explaining a telegraph equation of a power transmission line.

Prior to description of respective embodiments of the present invention, the principle of the present invention will be described. If sampling data of current $i = I \cdot \sin(\omega t)$ is passed through transfer function $f(Z) = (1+Z^{-1}+Z^{-2}+\cdots+Z^{-n})$, current $i'_{sm}$ at time $t_m$ indicated in the expression (10) is obtained.

$$I'_{sm} = I \cdot (\sin(\omega t_m) + \sin(\omega t_m - \omega T) + \cdots + \sin(\omega t_m - n\omega T))$$
$$= I \cdot (\sin((n+1)\omega T/2)/\sin(\omega T/2)) \cdot \sin(\omega t_m - n\omega T/2)$$
$$\cdots (10)$$

If this current $i'_{sm}$ is passed through transfer function $(1+k \cdot Z^{-1}+Z^{-2})$, current $i_{sm}$ at time $t_m$ indicated in the expression (11) is obtained.

$$i_{sm} = i'_{sm} + k \cdot i'_{sm-1} + i'_{sm-2}$$
$$= I \cdot (k + 2\cos(\omega T)) \cdot (\sin((n+1)\omega T/2)/$$
$$\sin(\omega T/2)) \cdot \sin(\omega t_m - (n+2)\omega T/2) \quad \cdots (11)$$

Likewise, current $i = I \cdot \sin(\omega t)$ is passed through the transfer function $f(Z) \cdot (1-Z^{-2})$, current $i_{jm}$ at time $t_m$ is obtained as indicated in the expression (12).

$$i_{jm} = 2I \cdot \cos(\omega T/2)\sin((n+1)\omega T/2) \cdot \cos(\omega t_m - (n+2)\omega T/2)$$
$$\cdots (12)$$

Voltage can be obtained in the same manner as current and if it is assumed that the voltages are $v_{sm}$ and $v_{jm}$, they are in such a relation that they are normal to each other.

Thus, if as the fundamental wave, its value which is as near 1 as possible is selected as long as the quantity for determining the size of the right side of the expression (12) is not $|\sin((n+1)\omega T/2)| \ll 1$, performance of frequency characteristic can be assured while suppressing amplification of noise error.

Therefore, if $i_{jm}$, $i_{sm}$, and $v_{sm}$ at time $t_m$ and $i_{jm-1}$, $i_{sm-1}$, and $v_{sm-1}$ at time $t_{m-1}$ are substituted for:

$$X_m = \frac{-v_{sm} \cdot i_{sm-p} + i_{sm} \cdot v_{sm-p}}{-i_{jm} \cdot i_{sm-p} + i_{jm-p} \cdot i_{sm}} \quad \cdots (13)$$

where m and p represent sampling time series, voltage $v_{sm}$ is provided in the form of:

$$v_{sm} = V \cdot (k + 2\cos(\omega T)) \cdot (\sin((n+1)\omega T/2)/$$
$$\sin(\omega T/2) \cdot \sin(\omega t_m + \theta - (n+2)\omega T/2) \qquad \cdots (14)$$

As a result, a reactance value $X_m$ is indicated in the expression (15):

$$Xm = \frac{V(k + 2\cos(\omega T))}{I\sin(\omega T)} \cdot \sin(\theta) \qquad \cdots (15)$$

where $\theta$ represents a leading angle of Voltage to current.

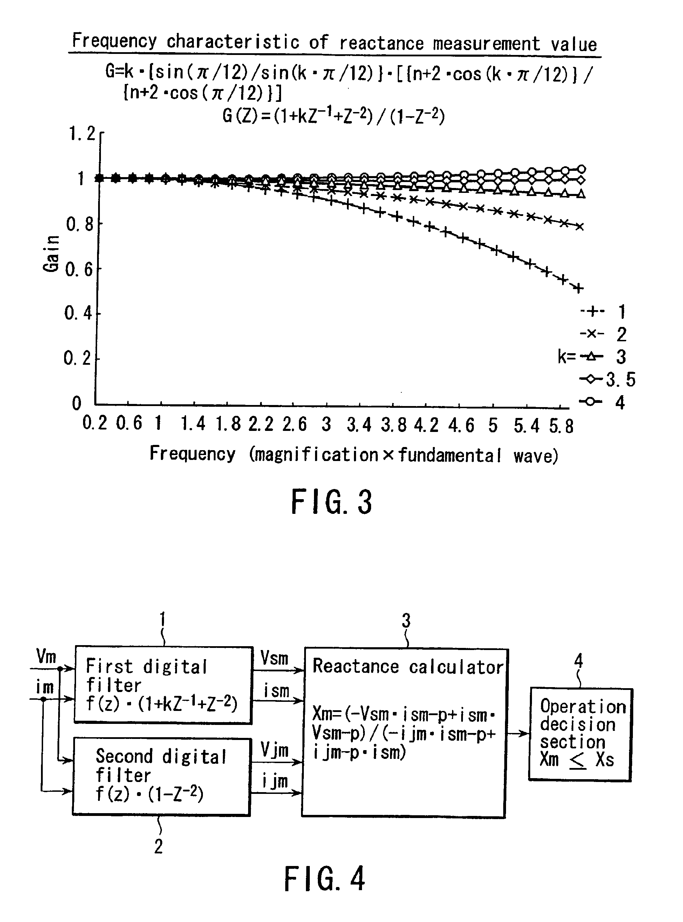

Therefore, when n is increased sufficiently in the expression (12), an influence of the noise error can be reduced. Frequency characteristic of $X_m$ relative to the fundamental wave can be indicated in a graph shown in FIG. 3. From this graph, it is evident that k = 4 provides the most excellent frequency characteristic.

$$= \frac{(k + 2\cos(\omega T))/(k + 2\cos(\omega_0 T))}{\sin(\omega T)/\sin(\omega_0 T)} \qquad \cdots (16)$$

A protection relay according to a first embodiment of the present invention will be described based on the above-described principle with reference to FIG. 4. FIG. 4 is a block diagram showing schematically the structure of the protection relay according to the first embodiment. The protection relay of the first embodiment suppresses amplification of the noise error contained in minute quantity of data even when the sampling period is shortened, in order to secure performance of frequency characteristic indicated in the expression (4).

Referring to FIG. 4, a first (digital) filter 1 comprises a digital filter (Z indicates a Z conversion operator) which outputs sampling data $v_m$ and $i_m$ about voltage v and current i of a power system as voltage data $v_{sm}$ and current data $i_{sm}$ through transfer function $f(Z) \cdot (1 + k \cdot Z^{-1} + Z^{-2})$ and extracts predetermined frequency components of voltage and current of a power system (not shown), which is a protecting object.

A second (digital) filter 2 comprises a digital filter (Z indicates a Z conversion operator) which outputs sampling data $v_m$ and $i_m$ as voltage data $v_{jm}$ and $i_{jm}$ through transfer function $f(Z) \cdot (1 - Z^{-2})$ and extracts voltage and current normal to the first filter 1 in all frequency components.

A reactance value calculator 3 calculates a reactance value $X_m$ from voltage data $v_{sm}$, current data $i_{sm}$, voltage data $v_{jm}$ and voltage data $i_{jm}$ at time $t_m$ and voltage data $i_{sm-p}$, current data $i_{sm-p}$, voltage data $v_{jm-p}$ and current data $i_{jm-p}$ at time $t_{m-p}$.

An operation decision section 4 compares the reactance value $X_m$ obtained by the reactance calculator 3 with a preliminarily set integer (whether or not $X_m \leq X_s$ is determined with $X_s$). The preliminarily set integer value is called setting value in this specification.

With such a configuration, the first filter having the transfer function $f(Z) \cdot (1 + k \cdot Z^{-1} + Z^{-2})$ receives input of sampling data $v_m$ and $i_m$ about voltage v and current i of the power system and outputs voltage data $v_{sm}$ and current data $i_{sm}$.

Further, the second filter having the transfer function $f(Z) \cdot (1 - Z^{-2})$ receives input of sampling data $v_m$ and $i_m$ about the voltage v and current i and outputs voltage data $v_{jm}$ and current data $i_{jm}$.

The reactance value calculator 3 calculates a reactance value $X_m$ from the voltage data $v_{sm}$ and current data $i_{sm}$ obtained by the first filter 1 and voltage data $v_{jm}$ and current data $i_{jm}$ obtained by the second filter 2 at time $t_m$, and voltage data $v_{sm-p}$ and current data $i_{sm-p}$ obtained by the first filter 1 and voltage data $v_{jm-p}$ and current data $i_{jm-p}$ obtained by the second filter 2 at time $t_{m-p}$ according to the expression (17):

$$X_m = \frac{-v_{sm} \cdot i_{sm-p} + i_{sm} \cdot v_{sm-p}}{-i_{jm} \cdot i_{sm-p} + i_{jm-p} \cdot i_{sm}} \qquad \cdots (17)$$

where, m and p represent sampling time series.

Further, the operation decision section 4 decides whether or not $X_m \leq X_s$ is established from the reactance value $X_m$ and setting value $X_s$ obtained by the reactance value calculator 3 and when that relation is established, it decides it is active and otherwise, it decides it is inactive.

The transfer functions of the first and second filters 1 and 2 are expressed in f(Z) · (1+k · Z$^{-1}$+Z$^{-2}$) and f(Z) · (1-Z$^{-2}$) when the Z conversion operator is employed. As already described before, the outputs of the first and second filters 1 and 2 are normal to each other. There is a relation that the output of the first filter 1 is delayed at 90° with respect to the output of the second filter 2.

It is permissible to define these transfer functions with transfer function 1: f(Z), transfer function 2: (1+k·Z$^{-1}$+Z$^{-2}$) and transfer function 3: 1-Z$^{-2}$ and form the first filter 1 and the second filter 2 by combining those.

That is, the same output can be obtained by passing the input voltage and current through a digital filter of the transfer function 1 and then passing its output through digital filters of the transfer functions 2 and 3.

The reactance value calculator 3 of FIG. 4 calculates a reactance value from a protection relay installation point in a power transmission line of FIG. 1 up to a faultal point according to the expression (17). Assuming that the input voltage and current are i = I · sin(ωt), and v = V · sin(ωt+θ), the expression (17) can be expressed in the expression (15).

The operation decision section 4 corrects the decision expression using the reactance value $X_m$, setting value $X_s$ and preliminarily set fundamental wave constant sin $(\omega_0 T)/(k+2\cdot\cos(\omega_0 T))$ with respect to the reactance value $X_m$ calculated by the reactance value calculator 3 as indicated in the expression (18) so as to decide whether or not it is active. Such operation decision is carried out plural times ordinarily.

$$X_m \leq X_s / (\sin(\omega_0 \cdot T)/(k+2\cdot\cos(\omega_0 \cdot T))) \qquad \cdots (18)$$

Consequently, amplification of error due to approximation of the differential item is suppressed, so that $L_m/L$ (true value) becomes a characteristic which is as near 1 as possible in a wide frequency band. Therefore, it is possible to block an influence even when a harmonic component occurs in fault voltage and fault current of the power system thereby improving reliability.

According to the above description, the reactance value calculator 3 calculates the reactance value using outputs of the first filter 1 and the second filter 2 and the operation decision section 4 decides whether or not it is active according to the condition expression (18) based on that reactance value.

The present invention is not restricted to this example, but it is permissible for an operating restarint quantity calculator 5 to calculate $a_m$ and $b_m$ according to the expression (19) based on the outputs of the first filter 1 and the second filter 2 and then for an operation decision section 6 to decide the operation according to the expression (20) to be described later using that result.

$$a_m = -v_{sm} \cdot i_{sm-p} + v_{sm-p} \cdot i_{sm}$$
$$b_m = -i_{jm} \cdot i_{sm-p} + i_{jm-p} \cdot i_{sm} \qquad \cdots (19)$$

That is, when current i = I · sin(ωt) and voltage v = V·sin(ωt+θ) are inputted to the first filter 1 of the transfer function f(Z) · (1-k · Z$^{-1}$+Z$^{-2}$) and the second filter 2 of the transfer function f(Z) · (1-Z$^{-2}$), the expression (19) is converted to the expression (20), providing that f(Z) = (1+Z$^{-1}$+Z$^{-2}$+ ⋯ +Z$^{-n}$) .

$$a_m = IV\{(k+2\cos(\omega T))^2 \cdot$$
$$(\sin((n+1)\omega T/2)/\sin(\omega T/2))^2\} \cdot \sin(\theta) \cdot \sin(p\omega T)$$
$$b_m = 2I^2\{\cos(\omega T/2) \cdot \sin((n+1)\omega T/2) \cdot$$
$$(k+2\cos(\omega T)) \cdot (\sin((n+1)\omega T/2)/\sin(\omega T/2))\}$$
$$\cdot \sin(p\omega T) \qquad \cdots (20)$$

The operation decision section 6 corrects sensitivity constant $K_0$ and reactance setting value $X_s$ to $X_s \leftarrow X_s/(\sin(\omega_0 T)/(k+2\cdot\cos(\omega_0 T)))$ using $a_m$ and $b_m$ outputted in this way and decides the operation according to a decision expression of the expression (21).

$$b_m \cdot X_m - a_m \geq k_0 \qquad \cdots (21)$$

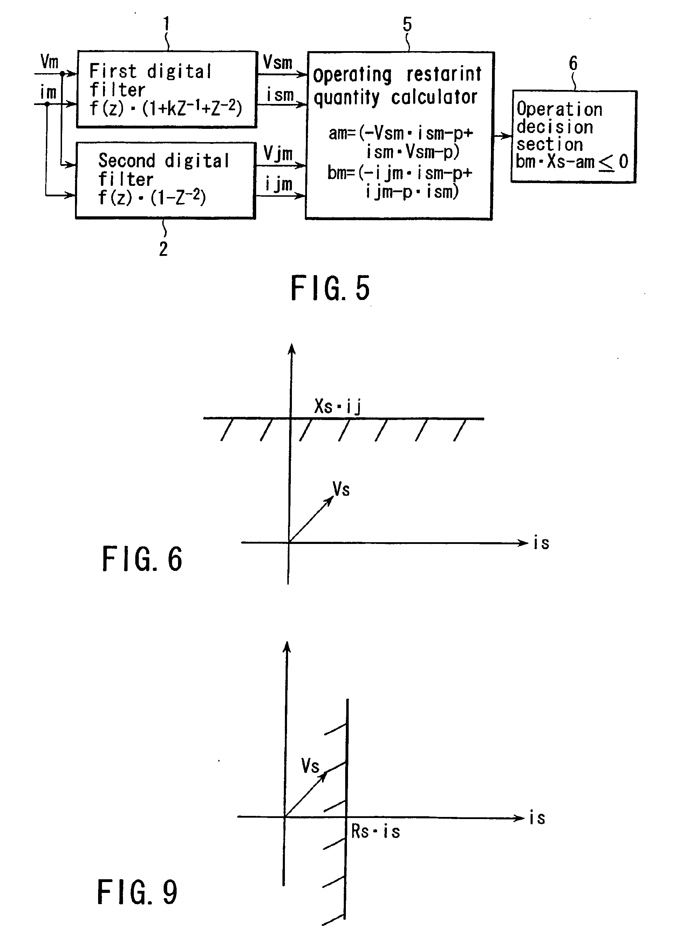

Although this is a different method from the above-described method, it has the reactance characteristic as shown in FIG. 6 like that example.

Consequently, amplification of error due to approximation of the differential item is suppressed, so that $L_m/L$ (true value) becomes a characteristic which is as near 1 as possible in a wide frequency band. Therefore, it is possible to block an influence even when a harmonic component occurs in fault voltage and fault current of the power system thereby improving reliability.

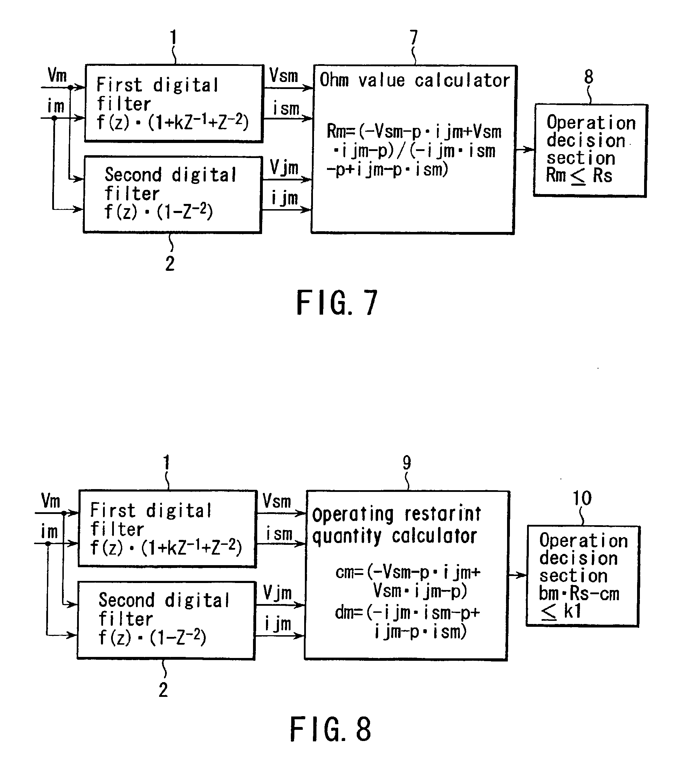

Further, it is permissible to use an Ohm value calculator 7 defined by expression (22) as shown in FIG. 7 as such calculation means or an operation decision section 8 defined by the expression (25), which will be described later.

$$R_m = \frac{-i_{jm} \cdot v_{sm-p} + v_{sm} \cdot i_{jm-p}}{-i_{jm} \cdot i_{sm-p} + i_{jm-p} \cdot i_{sm}} \qquad \cdots (22)$$

With this configuration, when current $i = I \cdot \sin(\omega t)$ and voltage $v = V \cdot \sin(\omega t + \theta)$ are inputted into the first filter 1 of the transfer function $f(Z) \cdot (1 + k \cdot Z^{-1} + Z^{-2})$ and the second filter 2 of the transfer function $f(Z) \cdot (1 - Z^{-2})$, the expression (23) is established, providing that $f(Z) = (1 + Z^{-1} + Z^{-2} + \cdots + Z^{-n})$. Further, the Ohm value $R_m$ is converted to the expression (24) because of the relation of the expression (20).

$$\begin{aligned}
-i_{im} \cdot v_{sm-p} + i_{jm-p} \cdot v_{sm} \\
= 2IV\cos(\omega T/2) \cdot \sin((n+1)\omega T/2) \cdot (k+2\cos(\omega T)) \cdot \\
(\sin((n+1)\omega T/2)/\sin(\omega T/2)) \cdot \cos(\theta) \cdot \sin(p\omega T)
\end{aligned} \qquad \cdots (23)$$

$$R_m = (V/I) \cdot \cos(\theta) \qquad \cdots (24)$$

The operation decision section 8 decides whether or not a decision expression for the expression (25) is established based on the Ohm value $R_m$ and the setting value $R_s$ calculated from the expression (24) and when that expression is established, it decides it is active.

$$R_m \leq R_s \qquad \cdots (25)$$

Consequently, amplification of error due to approximation of the differential item is suppressed, so that $L_m/L$ (true value) becomes a characteristic which is as near 1 as possible in a wide frequency band. Therefore, it is possible to block an influence even when a harmonic component occurs in fault voltage and fault current of the power system thereby improving reliability.

Further, it is permissible to use an operation restricting quantity calculator 9 defined by the expression (26) shown in FIG. 8 or an operation decision section 10 defined by the expression (28) which will be described later, as such calculation means.

$$\begin{aligned}
c_m &= -i_{jm} \cdot v_{sm-p} + v_{sm} \cdot i_{jm-p} \\
b_m &= -i_{jm} \cdot i_{sm-p} + i_{jm-p} \cdot i_{sm}
\end{aligned} \qquad \cdots (26)$$

That is, when current $i = I \cdot \sin(\omega t)$ and voltage $v = V \cdot \sin(\omega t + \theta)$ are inputted to the first filter 1 of the transfer function $f(Z) \cdot (1 - k \cdot Z^{-1} + Z^{-2})$ and the second filter 2 of the transfer function $f(Z) \cdot (1 - Z^{-2})$, the expression (26) is converted to the expression (27), providing that $f(Z) = (1 + Z^{-1} + Z^{-2} + \ldots + Z^{-n})$.

$$m = -i_{jm} \cdot v_{sm-p} + i_{jm-p} \cdot v_{sm}$$
$$= 2IV\cos(\omega T/2) \cdot \sin((n+1)\omega T/2) \cdot (k+2\cos(\omega T)) \cdot$$
$$(\sin((n+1)\omega T/2)/\sin(\omega T/2)) \cdot \cos(\theta) \cdot \sin(p\omega T)$$
$$\cdots (27)$$

Then, the operation decision section 10 decides whether or not it is active based on the decision expression (28) from $c_m$, $b_m$, Ohm setting value $R_s$ and sensitivity constant $K_l$.

$$R_s - c_m \geq k_l \qquad\qquad \cdots (28)$$

Such protection relay has Ohm characteristic shown in FIG. 9 like the configuration described with reference to FIG. 7 before and is different from it only in its realization method.

Consequently, amplification of error due to approximation of the differential item is suppressed, so that $L_m/L$ (true value) becomes a characteristic which is as near 1 as possible in a wide frequency band. Therefore, it is possible to block an influence even when a harmonic component occurs in fault voltage and fault current of the power system thereby improving reliability.

Next, a second embodiment of the present invention will be described with reference to the accompanying drawings. A description of the same configuration as the above-described embodiment is omitted appropriately while like reference numerals are attached to the same components in the Figures.

According to the first embodiment, for example, FIG. 4 indicates calculation of reactance and FIGS. 5, 8 indicate calculation of operating restarint quantity, and FIG. 7 indicates calculation of Ohm value and decision of operation based thereon.

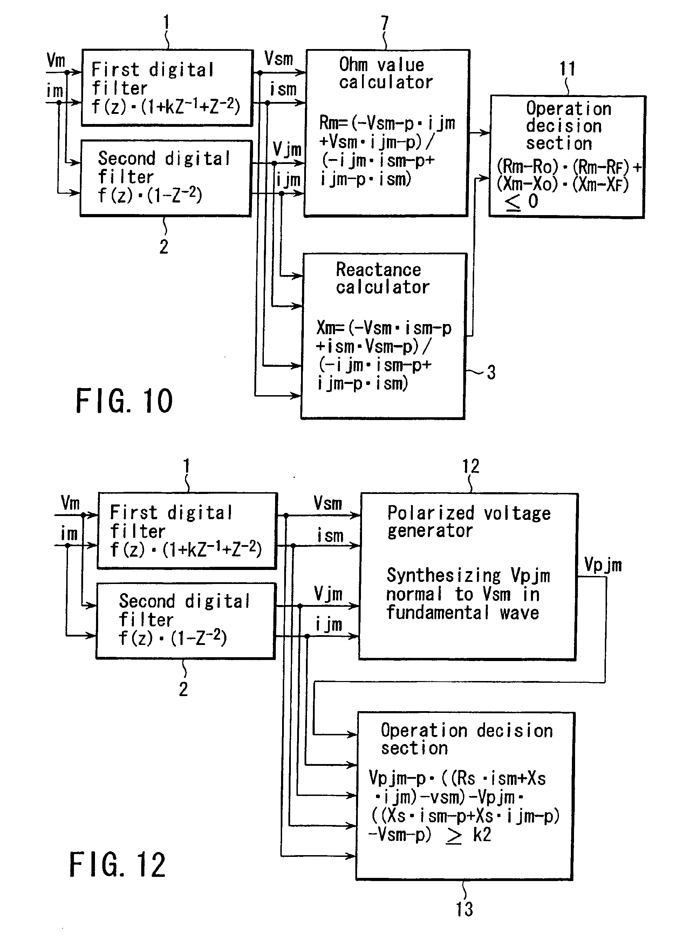

This embodiment contains the Ohm value calculator 7 and reactance value calculator 3 as shown in FIG. 10 and then, the operation decision section 11 decides the operation using these outputs.

That is, the voltage $v_{sm}$, current $i_{sm}$ and voltage $v_{jm}$, current $i_{jm}$ outputted from the first filter 1 and the second filter 2 are inputted to the Ohm value calculator 7 for calculating Ohm value and the reactance value calculator 3 for calculating reactance. The Ohm value calculator 7 calculates an Ohm value $R_m$ according to the expression:

$$R_m = \frac{-i_{jm} \cdot v_{sm-p} + v_{sm} \cdot i_{jm-p}}{-i_{jm} \cdot i_{sm-p} + i_{jm-p} \cdot i_{sm}}$$

The reactance value calculator 3 calculates reactance $X_m$ according to the expression (13).

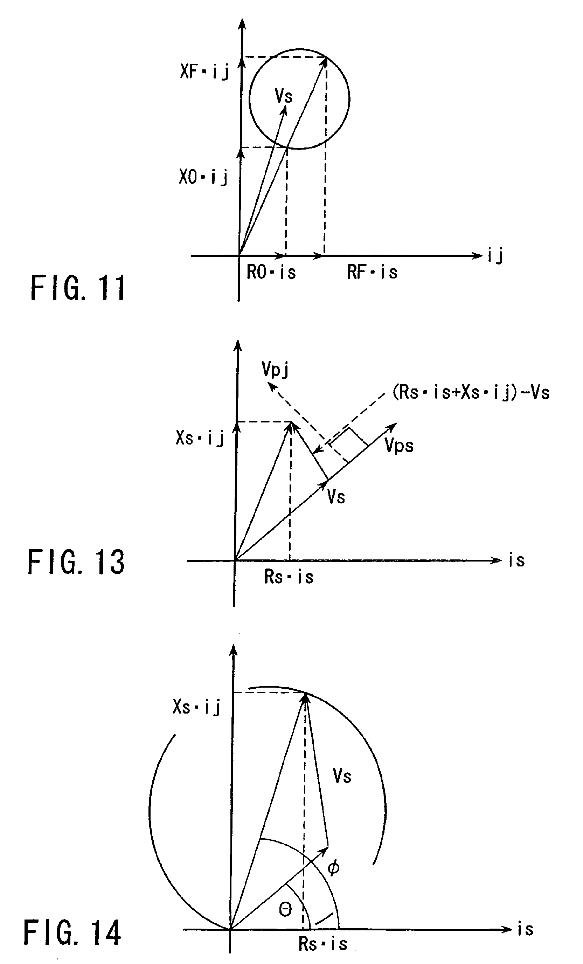

The operation decision section 11 decides whether or not it is active according to the expression (29) using the Ohm value $R_m$ and the reactance value $X_m$. This protection relay has offset mho characteristic indicated in FIG. 11:

$$(R_m - R_0) \cdot (R_m - R_p) + (X_m - X_0) \cdot (X_m - X_F) \leq 0 \qquad \cdots (29)$$

where, $R_0$ (Ohm component) represents an offset mho near side setting value;
$X_0$ (reactance component) represents an offset mho near side setting value;
$R_F$ (Ohm component) represents an offset mho far side setting value; and
$X_F$ (reactance component) represents an offset mho far side setting value.

A third embodiment of the present invention will be described with reference to the accompanying drawings. Description of the same configuration as the above-described embodiments is omitted while like reference numerals are attached thereto.

A protection relay of this embodiment comprises a polarized voltage value calculator 12 in which voltage $v_{sm}$, current $i_{sm}$ and voltage $v_{jm}$, current $i_{jm}$ are inputted in order to extract voltage $v_{pim}$ normal to voltage $v_{sm}$ and an operation decision section 13 in which the aforementioned voltages and currents are inputted while voltage $v_{pim}$ is inputted from the polarized voltage value calculator 12 so as to decide whether or not it is active according to the expression (30).

$$v_{pjm-p} \cdot ((Rs \cdot i_{sm} + Xs \cdot i_{jm}) - v_{sm}) -$$
$$v_{pjm} \cdot ((Rs \cdot i_{sm-p} + Xs \cdot i_{jm-p}) - v_{sm-p}) \geq K2 \qquad \cdots (30)$$

In the meantime, $R_s$ and $X_s$ are setting value s of an Ohm component and a reactance component respectively, while $X_s$ is corrected in the form of $X_s \leftarrow X_s / (\sin(\omega 0T)/(k+2 \cdot \cos(\omega 0T)))$.

In the expression (30), the quantities of electricity in the item of $(R_s \cdot ism + X_s \cdot i_{jm})$ and item of $(R_s \cdot i_{sm-p} + X_s \cdot i_{jm-p})$ are in such a relation that they are advanced only in size of $(R_s^2 + X_s^2)^{1/2}$ and phase of $\phi = \tan^{-1}(X_s/R_s)$ with respect to current $i_{sm}$. Its example will be shown in FIG. 13.

If current $i = I \cdot \sin(\omega t)$ and voltage $v = V \cdot \sin(\omega t + \theta)$ are inputted to the first filter 1 of the transfer function $f(Z) \cdot (1-k \cdot Z^{-1}+Z^{-2})$ and the second filter 2 of the transfer function $f(Z) \cdot (1-Z^{-2})$, the expression (31) is established, providing that $f(Z) = (1+Z^{-1}+Z^{-2}+ \cdots +Z^{-n})$ :

$$f(Z) = (1+Z^{-1}+Z^{-2}+ \cdots +Z^{-n}):$$
$$V_{pj} \cdot \{Rs \cdot I_s \cdot \cos(\theta) + Xs/(\sin(\omega_0 T)/$$
$$(k+2\cos(\omega_0 T))) \cdot I_j \cdot \sin(\theta)) - Vs\} \cdot \sin(p \omega T) \geq K2$$

where:

$$I_s = I(k+2\cos(\omega T))(\sin((n+1) \omega T/2)/\sin(\omega T/2))$$
$$V_s = V(k+2\cos(\omega T))(\sin((n+1) \omega T/2)/\sin(\omega T/2))$$
$$I_j = 2I\cos(\omega T/2)\sin((n+1) \omega T/2) \qquad \cdots (31)$$

Then, if the expression (31) is expressed with Zs (size: $(R_s^2 + X_s^2)^{1/2}$ and phase $\phi = \tan^{-1}(X_s/R_s)$), expression (32) is established. Therefore, the expression (32) indicates operation principle expression of mho characteristic shown in FIG. 14 if its frequency is basic frequency.

$$Vpj \cdot \{(Zs \cdot Is \cdot \cos(\theta)\cos(\phi) + Zs \cdot Ij \cdot \sin(\theta)\sin(\phi)/$$
$$(\sin(\omega_0 T)/(k+2\cos(\omega_0 T)) - Vs) \cdot \sin(p \omega T)$$
$$=Vpj \cdot \{Zs \cdot I \cdot (\cos(\theta)\cos(\phi)(k+2\cos(\omega T))/$$
$$\sin(\omega T)+\sin(\theta)\sin(\phi)$$
$$(k+2\cos(\omega_0 T))/\sin((\omega_0 T)) - Vs\} \cdot \sin(p \omega T)$$
$$\because \omega = \omega_0$$
$$=Vpj \cdot \{Zs \cdot I \cdot \cos(\theta-\phi) - Vs\} \cdot \sin(p \omega T) \geq K2 \qquad \cdots (32)$$

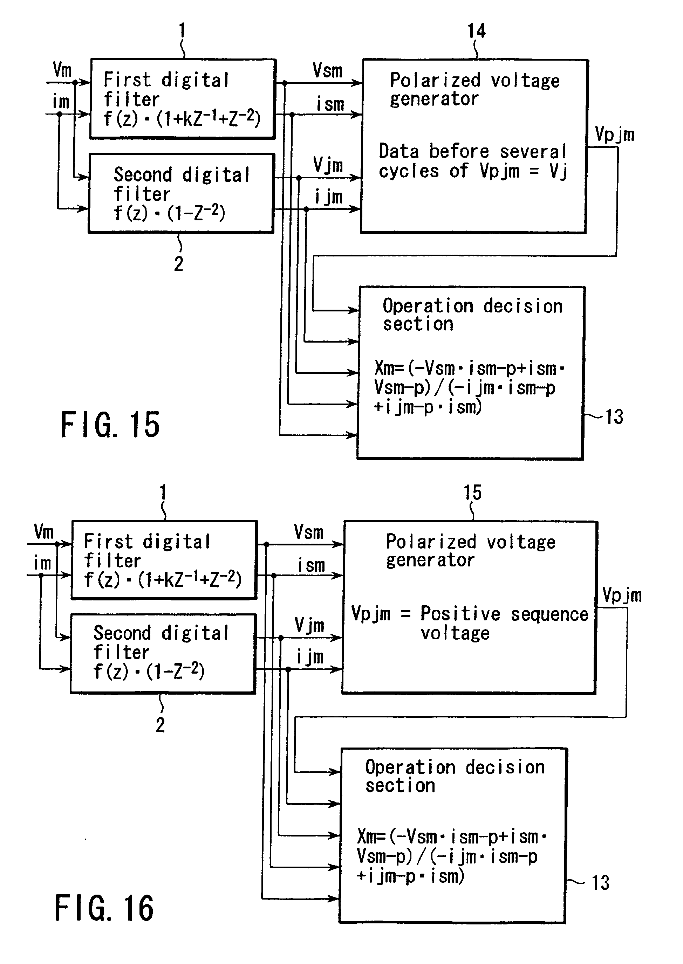

The above-described structure indicates a case where voltage $v_{pjm}$ normal to voltage $v_{sm}$ in the fundamental wave is extracted by the polarized voltage value calculator 12. The present invention is not restricted to this example. For example, it is permissible to provide with a polarized voltage value calculator 14 which regards a voltage before predetermined cycles (data before N samplings) of the voltage $v_{jm}$ normal to voltage $V_{sm}$ as polarized voltage as shown in FIG. 15. In this case, the voltage $v_{pjm}$ and voltage $v_{sm}$ are indicated in the expression (33).

$$v_{pjm}=2V \cdot \sin((n+1) \omega T/2) \cdot \cos(\omega T/2)$$
$$\cdot \cos(\omega tm+ \theta =N \omega T- (n+2) \omega T/2)$$
$$v_{sm} =V \cdot (k+2\cos(\omega T)) \cdot \sin((n+1) \omega T/2)/$$
$$\sin(\omega T/2) \cdot \sin(\omega tm+ \theta - (n+2) \omega T/2) \qquad \cdots (33)$$

($N\omega_0 T = 2\pi \cdot M$, M is an integer)

It is permissible to provide with a polarized voltage value calculator 15 for extracting voltage $v_{pim}$ normal to voltage $v_{sm}$ as shown in FIG. 16 and if this is for detecting a short-circuit, in case of, for example, AB phase, extract positive sequence voltage relative to the AB phase. A, B, and C indicate each phase of three-phase AC quantity of electricity.

For example, positive sequence voltage relative to the AB phase can be extracted according to $v_{psm}(AB) = -3^{1/2}(v_{jm}(C) - v_{jm}(0)) + v_{sm}(AB)$. Here, $v_{sm}(0)$ indicates zero phase quantity of electricity.

Further, if this is for ground fault, the positive sequence voltage relative to A phase can be calculated according to $v_{psm}(A) = 3^{1/2} \cdot (vsm(A) - v_{sm}(0) + v_{jm}(BC))$.

In addition to the method for extracting voltage vector from two electricity quantities normal to each other, it is permissible to apply a method in which sampling time series is shifted by 90° or equivalent.

Consequently, amplification of error due to approximation of the differential item is suppressed, so that $L_m/L$ (true value) becomes a characteristic which is as near 1 as possible in a wide frequency band. Therefore, it is possible to block an influence even when a harmonic component occurs in fault voltage and fault current of power system thereby improving reliability.

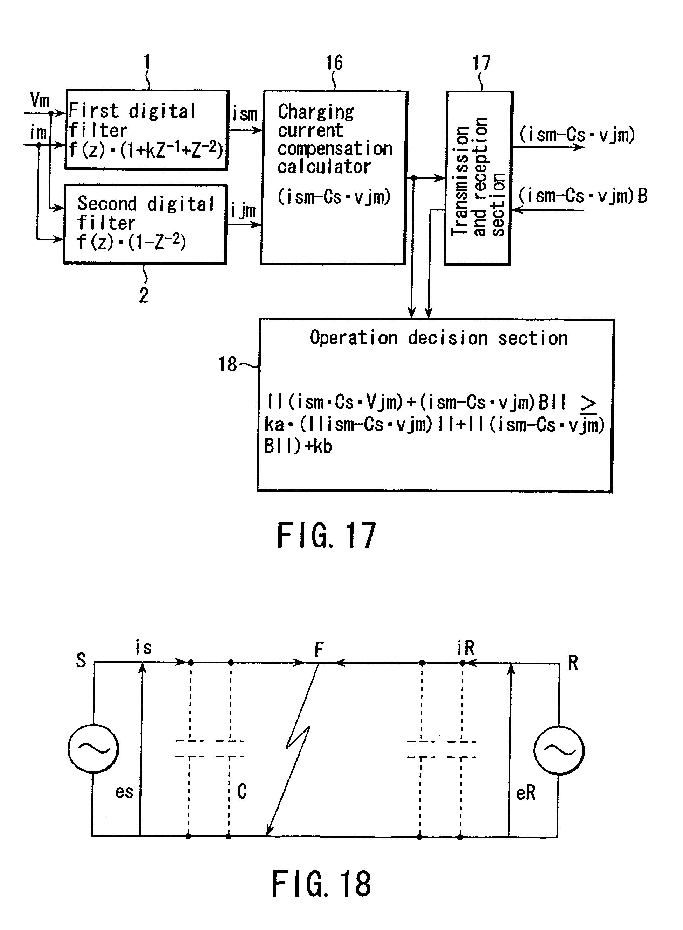

A fourth embodiment of the present invention will be described with reference to FIG. 17. Description of the same configuration as the above-described embodiments is omitted while like reference numerals are attached thereto.

FIG. 17 is a block diagram of a protection relay applied to description of this embodiment. According to the fourth embodiment, outputs from the first filter 1 and the second filter 2 are inputted to a charging current compensation calculator 16 and its output is inputted to an operation decision section 18 which follows operation decision principle of ratio differential relay type so as to decide whether or not it is active.

The charging current compensation calculator 16 corrects a setting value $C_s$ in the form of $C_s \leftarrow C_s \cdot (k + 2\cos(\omega_0 T)/\sin(\omega_0 T)$ and calculates $i_{sm} - C_s \cdot v_{jm}$ using output current $i_{sm}$ from the first filter 1 and output voltage $v_{jm}$ from the second filter 2. In the meantime, $C_s \cdot v_{jm}$ indicates current compensation generated by charge capacity $C_s$.

Then, opposing quantity of electricity $(i_{sm} - C_s \cdot v_{jm})B$ of an opposite terminal is received by transmission and reception section 17 and quantity of electricity of itself terminal is transmitted to the electric power station. Here, B indicates quantity of electricity at an opposite terminal.

After that, the operation decision section 18 decides the operation based on vectorial sum of current which compensates for charge current at itself terminal obtained by the charging current compensation calculator 16 and current which compensates for charge current at a terminal of the opposite terminal, namely, scalar sum of amplitude value of differential current and currents which compensate for charge current at each terminal, according to expression (34):

$$\| (i_{sm} - Cs \cdot v_{jm}) + (i_{sm} - Cs \cdot v_{jm})B \| \geq$$
$$ka \cdot \{ \| (i_{sm} - Cs \cdot v_{jm}) \| + \| (i_{sm} - Cs \cdot v_{jm})B \| \} + kb$$
$$\cdots (34)$$

where, $\|am\|$ represents quantity parallel to amplitude of AC quantity of electricity at time $t_m$;
ka represents a proportion restricting coefficient; and
kb represents minimum sensitivity current.

Physical meaning of the charging current compensation indicated in the expression (34) will be described with reference to a power transmission line in FIG. 18. A well known telegraph equation is expressed at transmission/reception terminal as shown in expression (35). Then, if Taylor expansion approximation is executed on differential current iDD (t) with the condition of ($\tau \fallingdotseq 0$), the expression (36) is obtained:

Waveform of forward movement:

$$i_{DF}(t) = i_S(t - \tau) + e_S(t - \tau)/z + i_R(t + \tau) - e_R(t + \tau)/z$$

Waveform of backward movement:

$$i_{DB}(t) = i_S(t - \tau) - e_S(t - \tau)/z + i_R(t + \tau) + e_R(t + \tau)/z$$

Differential current:

$$i_{DD}(t) = (i_{DF}(t) + i_{DB}(t))/2 \cdots (35)$$

where, suffix S represents a transmitting terminal;
R represents a receiving terminal;
Z represents a surge impedance =; and
$\tau$ represents propagation time = $1/v$ (LC) .

$$i_{DD}(t) = i_S(t) - (\tau / z)\frac{de_S(t)}{dt} + (\tau^2 / z)\frac{d^2e_S(t)}{dt^2} - (\tau^3 / 3lz)\frac{d^3e_S(t)}{dt^3} \cdots$$
$$+ i_R(t) - (\tau / z)\frac{de_R(t)}{dt} + (\tau^2 / z)\frac{d^2e_R(t)}{dt^2} - (\tau^3 / 3lz)\frac{d^3e_R(t)}{dt^3}$$
$$\cdots (36)$$

$\because \tau/Z = \Sigma C/2$(1/2 charge capacity in entire SR interval)

Even if differential current is extracted with only current vectorial sum current (is(t) + iR(t)) at the transmission/ reception terminal, the aforementioned charge current component becomes error current, thereby inducing a drop of sensitivity of the differential relay. Thus, only a fault current component can be extracted by compensating for this.

$$i_{DD}(t) = i_S(t) - (\tau / z)\frac{de_S(t)}{dt} + i_R(t) - (\tau / z)\frac{de_R(t)}{dt} \quad \cdots (37)$$

In the above description, the transfer function f(Z) in the first filter 1 and the second filter 2 has been described in the form of $f(Z) = (1+Z^{-1}+Z^{-2}+ \cdots +Z^{-n})$. It is evident that the same effect can be obtained even if the transfer function is $f(Z) = (1+Z^{-2}+Z^{-4}+ \cdots +Z^{-2n})$.
In this case, in the expression (10), $\omega T/2$ only should be replaced for $\omega T$ and in that case, the expression (38) is established. Likewise, the expressions (8) and (12) only should be replaced. For convenience of following description, it is described that $f1 = f(Z) = (1+Z^{-1}+Z^{-2}+ \cdots +Z^{-n})$, and $f2 = f(Z) = (1+Z^{-2}+Z^{-4}+ \cdots +Z^{-2n})$.

$$i'_{sm} = I \cdot (\sin(\omega t_m) + \sin(\omega t_m - 2\omega T) + \cdots + \sin(\omega t_m - 2n\omega T))$$
$$= I \cdot (\sin((n+1)\omega T)/\sin(\omega T)) \cdot \sin(\omega t_m - n\omega T) \quad \cdots (38)$$

If f1 is replaced to f2, the quantity of data in the latter can be reduced assuming that the window length of data for use is the same and approximation error of integration is of the same value. For example, if n = 2 is adapted in case of f1, n = 1 may be adapted in case of f2.
Because gain in the first filter 1 and the second filter 2 using f1 is larger than gain in the first filter 1 and the second filter 2 using f2, noise error can be compressed by that amount.
For example, when f1 is used, gain G1 of n = 2 is expressed in the expression (39) and if f2 is used, gain G2 of n = 2 is expressed in the expression (40).

$$G1 = |\sin(3\omega T/2)/\sin(\omega T/2)| = |2\cos(\omega T)+1| \quad \cdots (39)$$

$$G2 = |\sin(2\omega T)/\sin(\omega T)| = |2\cos(\omega T)| \quad \cdots (40)$$

Such transfer function f(Z) is constructed with FIR fileter. The present invention is not restricted to this example, but the same integration error characteristic can be achieved even when it is constructed with recursive digital filter.
Consequently, amplification of error due to approximation of the differential item is suppressed, so that $L_m/L$

(true value) becomes a characteristic which is as near 1 as possible in a wide frequency band. Therefore, it is possible to block an influence even when a harmonic component occurs in fault voltage and fault current of the power system thereby improving reliability.

According to the present invention, as described above, even when a harmonic component is overlaid on a fault current and a fault voltage generated upon a fault of a power system, a predetermined time differential equation can be solved approximately by passing through predetermined digital filters normal to each other in a wide frequency band, thereby achieving a high accuracy protection relay.

**Claims**

1. A protection relay for determining whether or not a fault point of a power system exists in a predetermined range, comprising:

   filter means (1, 2) for inputting sampling data of a voltage and a current in the power system to a digital filter having a predetermined transfer function and outputting a first voltage data and a first current data, and a second voltage data and a second current data normal to the first voltage data and the first current data, respectively; calculation means for calculating a predetermined measurement value based on the first voltage data, the first current data, the second voltage data and the second current data at a first time and the first voltage data, the first current data, the second voltage data and the second current data at a second time different from the first time; and operation decision means for performing an operation decision based on the predetermined measurement value obtained by the calculation means,

   wherein the filter means comprises: first filter means for inputting the sampling data to a digital filter having the first transfer function $f(Z)\cdot(1+k\cdot Z^{-1}+Z^{-2})$ (Z indicates a Z conversion operator) so as to output the first voltage data and current data; and second filter means for inputting the sampling data to a digital filter having the second transfer function $f(Z)\cdot(1-Z^{-2})$ (Z indicates a Z conversion operator) so as to output the second voltage data and the second current data.

2. The protection relay according to claim 1, **characterized in that** the predetermined measurement value obtained by the calculation means contains at least one of a reactance value and an Ohm value.

3. The protection relay according to claim 2, **characterized in that** the filter means (1, 2) comprises :

   first filter means (1) for inputting the sampling data $v_m$ and $i_m$ at the first time $T_m$ to a digital filter having transfer function $f(Z)\cdot(1+k\cdot Z^{-1}+Z^{-2})$ (Z indicates a Z conversion operator) so as to output voltage data $v_{sm}$ and current data $i_{sm}$; and second filter means (2) for inputting the sampling data $v_m$, $i_m$ at the first time $T_m$ is inputted to a digital filter having transmission $f(Z)\cdot(1-Z^{-2})$ (Z indicates a Z conversion operator) so as to output voltage data $v_{jm}$ and current data $i_{jm}$ normal to the voltage data $v_{sm}$ and the current data $i_{sm}$. the calculation means calculates a reactance value $X_m$ based on:

$$X_m = \frac{-v_{sm}\cdot i_{sm-p} + i_{sm}\cdot v_{sm-p}}{-i_{jm}\cdot i_{sm-p} + i_{jm-p}\cdot i_{sm}}$$

   using the first voltage data $v_{sm}$, the first current data $i_{sm}$, the second voltage data $v_{jm}$ and the second current data $i_{jm}$ at the first time $t_m$ and the first voltage data $v_{sm-p}$, the first current data $i_{sm-p}$, the second voltage data $v_{jm-p}$ and the second current data $i_{jm-p}$ at the second time $t_{m-p}$, and the operation decision means has an operation decision section which decides the operation based on the reactance value $X_m$.

4. The protection relay according to claim 3, **characterized in that** the operation decision means decides the operation based on a decision expression of $X_m \leq X_s$ based on the reactance value $X_m$ and a setting value $X_s$.

5. The protection relay according to claim 3, **characterized in that** the calculation means calculates an Ohm value

$R_m$ based on:

using the first voltage data $v_{sm}$, the first current data $i_{sm}$, the second voltage data $v_{jm}$ and the second current data $i_{jm}$ at the first time $t_m$ and the first voltage data $v_{sm-p}$, the first current data $i_{sm-p}$, the second voltage data $v_{jm-p}$ and the second current data $i_{jm-p}$ at the second time $t_{m-p}$, the Ohm value $R_m$ is calculated based on

$$R_m = \frac{-i_{jm} \cdot v_{sm-p} + v_{sm} \cdot i_{jm-p}}{-i_{jm} \cdot i_{sm-p} + i_{jm-p} \cdot i_{sm}},$$

and
the operation decision means decides the operation from the reactance value $X_m$ from the calculation means according to a decision expression:

$$(R_m - R_0) \cdot (R_m - R_F) + (X_m - X_0) \cdot (X_m - X_F) \leqq 0$$

where;

$R_0$ (Ohm component) represents an offset mho near side setting value;
$X_0$ (reactance component) represents an offset mho near side setting value;
$R_F$ (Ohm component) represents an offset mho far side setting value; and
$X_F$ (reactance component) represents an offset mho far side setting value.

6. The protection relay according to claim 2, **characterized in that**

the filter means (1, 2) comprises: first filter means (1) for inputting the sampling data $v_m$ and $i_m$ at the first time $T_m$ to a digital filter having transfer function $f(Z) \cdot (1 + k \cdot Z^{-1} + Z^{-2})$ ($Z$ indicates a $Z$ conversion operator) so as to output voltage data $v_{sm}$ and current data $i_{sm}$; and second filter means (2) for inputting the sampling data $v_m$ and $i_m$ at the first time $T_m$ to a digital filter having transmission $f(Z) \cdot (1 - Z^{-2})$ ($Z$ indicates a $Z$ conversion operator) so as to output voltage data $v_{jm}$ and current data $i_{jm}$, normal to the voltage data $v_{sm}$ and the current data $i_{sm}$, and the calculation means calculates an Ohm value $R_m$ using the first and second voltage data $v_{sm}$, $v_{jm}$, $v_{sm-p}$ and $v_{jm-p}$ and the first and second current data $i_{sm}$, $i_{jm}$, $i_{sm-p}$ and $i_{jm-p}$ at the first and second times $T_m$ and $T_{m-p}$, which are obtained by the first fitter means (1) and second filter means (2), and the operation decision means decides the operation based on the Ohm value $R_m$ from the calculation means.

7. The protection relay according to claim 1 **characterized by** further comprising:

polarized voltage value calculation means for inputting the first and second voltage data and the first and second current data so as to calculate a third voltage normal to the fist voltage;

wherein the polarized voltage value calculation means calculates a third voltage $v_{pjm}$ based on the first voltage data $v_{sm}$, the first current data $i_{sm}$, the second voltage data $v_{jm}$, and the second current data $i_{jm}$ and the operation decision means decides the operation based on:

$$v_{pjm-p} \cdot \{(R_s \cdot i_{sm} + X_s \cdot i_{jm}) - v_{sm}\}$$

$$-v_{pjm} \cdot \{(R_s \cdot i_{sm-p} + X_s \cdot i_{jm-p}) - v_{sm-p}\} > K_2$$

using the third voltage $v_{pjm}$, the first voltage $v_{sm}$, the first current data $i_{sm}$, the second voltage data $v_{jm}$, the second current data $i_{jm}$ at the first time $t_m$ and the first voltage data $v_{jm-p}$, the first current data $i_{jm-p}$ at the second time $t_{m-p}$ and a setting value ($R_s$, $U_s$).

8. The protection relay according to claim 7, **characterized in that** the polarized voltage value calculation means calculates a voltage before predetermined cycles of a voltage normal to the first voltages as the third voltage.

9. The protection relay according to claim 1, **characterized in that**:

the first filter means (1) inputs sampling data $v_m$ and $i_m$ of voltage v and current i in the power system to a digital filter so as to output voltage data $v_{sm}$ and current data $i_{sm}$, and

the second filter means (2) in which the sampling data $v_m$, $i_m$ are inputted to a digital filter outputs voltage data $v_{jm}$ and current data $i_{jm}$ normal to the voltage data $v_{sm}$ and current data $i_{sm}$, further comprises:

charging current compensation calculation means (16) for calculating quantity of electricity defined in $i_{sm}-C\cdot v_{jm}$ by the current data $i_{sm}$, the voltage data $v_{jm}$, and a setting value $C_s$ at time $t_m$; and

transmission and reception means (17) for transmitting output of the charging current compensation calculation means to an opposite terminal and when quantity of electricity at the opposite terminal is assumed to be B, receiving quantity of electricity defined by $(i_{sm}-C\cdot v_{jm})B$ at the opposite terminal, and wherein the operation decision means (18) performs an operation decision based on the outputs from the charging current compensation calculation means and the transmission/reception means according to the following expression:

$$\| (i_{sm}-C_s\bullet v_{jm})+(i_{sm}-C_s\bullet v_{jm})B \| \geq$$

$$ka\bullet\{\| i_{sm}-C_s\bullet v_{jm}\|+\|(i_{sm}-C_s\bullet v_{jm})B\|\}+kb$$

where,

$\|am\|$ represents a quantity parallel to amplitude of AC quantity of electricity "a" at time $t_m$;
ka represents a proportion restricting coefficient; and
kb represents minimum sensitivity current.

## Patentansprüche

1. Schutzrelais zum Bestimmen, ob ein Fehlerpunkt eines Leistungssystems in einem vorbestimmten Bereich existiert, oder nicht, enthaltend
ein Filtermittel (1, 2) zum Eingeben von Abtastdaten einer Spannung und eines Stroms in dem Leistungssystem in ein digitales Filter, das eine vorbestimmte Übertragungsfunktion aufweist, und zum Ausgeben von ersten Spannungsdaten und ersten Stromdaten, und von zweiten Spannungsdaten und zweiten Stromdaten normal zu den ersten Spannungsdaten bzw. ersten Stromdaten;
ein Berechnungsmittel zum Berechnen eines vorbestimmten Messwerts basierend auf den ersten Spannungsdaten, den ersten Stromdaten, den zweiten Spannungsdaten und den zweiten Stromdaten zu einem ersten Zeitpunkt, und den ersten Spannungsdaten, ersten Stromdaten, zweiten Spannungsdaten und zweiten Stromdaten zu einem zweiten Zeitpunkt, der von dem ersten Zeitpunkt verschieden ist; und
ein Betriebsentscheidungsmittel zum Durchführen einer Betriebsentscheidung basierend auf dem vorbestimmten Messwert, der von dem Berechnungsmittel erhalten wird;
wobei das Filtermittel aufweist: ein erstes Filtermittel zum Eingeben der Abtastdaten in ein digitales Filter, das die erste Übertragungsfunktion $f(Z)\cdot(1+k\cdot Z^{-1}+Z^{-2})$ (Z gibt einen Z Umwandlungsoperator an) aufweist, um die ersten Spannungsdaten und Stromdaten auszugeben; und ein zweites Filtermittel zum Eingeben der Abtastdaten in ein digitales Filter, das die zweite Übertragungsfunktion $f(Z)\cdot(1-Z^{-2})$ (Z gibt einen Z Umwandlungsoperator an) aufweist, um die zweiten Spannungsdaten und die zweiten Stromdaten auszugeben.

2. Schutzrelais nach Anspruch 1, **dadurch gekennzeichnet, dass** der vorbestimmte Messwert, der durch das Berechnungsmittel erhalten wird, mindestens einen Reaktanzwert und/oder einen Ohm-Wert aufweist.

3. Schutzrelais nach Anspruch 2, **dadurch gekennzeichnet, dass** das Filtermittel (1, 2) aufweist:

ein erstes Filtermittel (1) zum Eingeben der Abtastdaten $v_m$ und im zu dem ersten Zeitpunkt $T_m$ in ein digitales Filter, das eine Übertragungsfunktion $f(Z)\cdot(1+k\cdot Z^{-1}+Z^{-2})$ (Z gibt einen Z Umwandlungsoperator an) aufweist, um Spannungsdaten $v_{sm}$ und Stromdaten $i_{sm}$ auszugeben; und ein zweites Filtermittel (2) zum Eingeben der Abtastdaten $v_m$, im zu dem ersten Zeitpunkt $T_m$ in ein digitales Filter, das die Übertragungsfunktion $f(Z)\cdot(1-Z^{-2})$ (Z gibt einen Z Umwandlungsoperator an) aufweist, um die Spannungsdaten $v_{jm}$ und Stromdaten $i_{jm}$ normal zu

den Spannungsdaten $v_{sm}$ und Stromdaten $i_{sm}$ auszugeben, wobei
das Berechnungsmittel einen Reaktanzwert $X_m$ berechnet basierend auf:

$$X_m = \frac{-v_{sm} \cdot i_{sm-p} + i_{sm} \cdot v_{sm-p}}{-i_{jm} \cdot i_{sm-p} + i_{jm-p} \cdot i_{sm}}$$

indem die Erstspannungsdaten $v_{sm}$, die ersten Stromdaten $i_{sm}$, die zweiten Spannungsdaten $v_{jm}$ und die zweiten Stromdaten $i_{jm}$ zu dem ersten Zeitpunkt $t_m$ und die ersten Spannungsdaten $v_{sm-p}$, die ersten Stromdaten $i_{sm-p}$, die zweiten Spannungsdaten $v_{jm-p}$ und die zweiten Stromdaten $i_{jm-p}$ zu dem zweiten Zeitpunkt $t_{m-p}$ verwendet werden, und
das Betriebsentscheidungsmittel einen Betriebsentscheidungsabschnitt aufweist, der den Betrieb basierend auf dem Reaktanzwert $X_m$ entscheidet.

4. Schutzrelais nach Anspruch 3, **dadurch gekennzeichnet, dass** das Betriebsentscheidungsmittel den Betrieb basierend auf einem Entscheidungsausdruck $X_m \leq X_s$, der auf dem Reaktanzwert $X_m$ und einem Setzwert $X_s$ basiert, entscheidet.

5. Schutzrelais nach Anspruch 3, **dadurch gekennzeichnet, dass** das Berechnungsmittel einen Ohm-Wert $R_m$ berechnet basierend auf:

Verwenden der ersten Spannungsdaten $v_{sm}$, der ersten Stromdaten $i_{sm}$, der zweiten Spannungsdaten $v_{jm}$ und der zweiten Stromdaten $i_{jm}$ zu dem ersten Zeitpunkt $t_m$, und der ersten Spannungsdaten $v_{sm-p}$, der ersten Stromdaten $i_{sm-p}$, der zweiten Spannungsdaten $v_{jm-p}$ und der zweiten Stromdaten $i_{jm-p}$ zu dem zweiten Zeitpunkt $t_{m-p}$, wobei der Ohm-Wert $R_m$ berechnet wird basierend auf

$$R_m = \frac{-i_{jm} \cdot v_{sm-p} + v_{sm} \cdot i_{jm-p}}{-i_{jm} \cdot i_{sm-p} + i_{jm-p} \cdot i_{sm}},$$

und
das Betriebsentscheidungsmittel den Betrieb entscheidet von dem Reaktanzwert $X_m$ von dem Berechnungsmittel gemäß einem Entscheidungsausdrucks:

$$(R_m\text{-}R_0)\cdot(R_m\text{-}R_F)+(X_m\text{-}X_0)\cdot(X_m\text{-}X_F)\leq 0$$

wobei;

$R_0$ (Ohm-Komponente) einen Offset mho zu einer Seite des Setzwerts darstellt;
$X_0$ (Reaktanz-Komponente) einen Offset mho zu der einen Seite des Setzwerts auch darstellt;
$R_F$ (Ohm-Komponente) einen Offset mho zu einer anderen Seite des Setzwerts darstellt; und
$X_F$ (eine Reaktanz-Komponente) einen Offset mho zu der anderen Seite des Setzwerts darstellt.

6. Schutzrelais nach Anspruch 2, **dadurch gekennzeichnet, dass**
das Filtermittel (1, 2) aufweist: ein erstes Filtermittel (1) zum Eingeben der Abtastdaten $v_m$ und im zu dem ersten Zeitpunkt $T_m$ in ein digitales Filter, das eine Übertragungsfunktion $f(Z) \cdot (1+k \cdot Z^{-1}+Z^{-2})$ (Z gibt einen Z Umwandlungsoperator an) aufweist, um Spannungsdaten $v_{sm}$ und Stromdaten $i_{sm}$ auszugeben; und ein zweites Filtermittel (2) zum Eingeben der Abtastdaten $v_m$ und $i_m$ zu dem ersten Zeitpunkt $T_m$ in ein digitales Filter, das eine Übertragung $f(Z) \cdot (1-Z^{-2})$ (Z gibt einen Z Umwandlungsoperator an) aufweist, um Spannungsdaten $v_{jm}$ und Stromdaten $i_{jm}$ normal zu den Spannungsdaten $v_{sm}$ und den Stromdaten $i_{sm}$ auszugeben, und
das Berechnungsmittel einen Ohm-Wert $R_m$ berechnet unter Verwendung der ersten und zweiten Spannungsdaten $v_{sm}$, $v_{jm}$, $v_{sm-p}$ und $v_{jm-p}$ und der ersten und zweiten Stromdaten $i_{sm}$, $ij_m$, $i_{sm-p}$ und $i_{jm-p}$ zu dem ersten und zweiten Zeitpunkt $T_m$ und $T_{m-p}$, die durch das erste Filtermittel (1) und das zweite Filtermittel (2) erhalten werden, und
das Betriebsentscheidungsmittel den Betrieb basierend auf dem Ohm-Wert $R_m$ von dem Berechnungsmittel ent-

scheidet.

7. Schutzrelais nach Anspruch 1, ferner **gekennzeichnet durch**

ein polarisierter-Spannungswert-Berechnungsmittel zum Eingeben der ersten und zweiten Spannungsdaten und der ersten und zweiten Stromdaten, um eine dritte Spannung normal zu der ersten Spannung zu berechnen; wobei das polarisierter-Spannungswert-Berechnungsmittel eine dritte Spannung $v_{pjm}$ basierend auf den ersten Spannungsdaten $v_{sm}$, den ersten Stromdaten $i_{sm}$, den zweiten Spannungsdaten $v_{jm}$ und den zweiten Stromdaten $i_{jm}$ berechnet, und

das Betriebsentscheidungsmittel den Betrieb entscheidet basierend auf:

$$v_{pjm-p} \cdot \{(R_s \cdot i_{sm} + X_s \cdot i_{jm}) - v_{sm}\}$$

$$-v_{pjm} \cdot \{(R_s \cdot i_{sm-p} + X_s \cdot i_{jm-p}) - v_{sm-p}\} > K_2$$

indem die dritte Spannung $v_{pjm}$, die erste Spannung $v_{sm}$, die ersten Stromdaten $i_{sm}$, die zweiten Spannungsdaten $v_{jm}$, die zweiten Stromdaten $i_{jm}$ zu dem ersten Zeitpunkt $t_m$ und die ersten Spannungsdaten $v_{jm-p}$, die ersten Strom-daten $i_{jm-p}$ zu dem zweiten Zeitpunkt $t_{m-p}$ und ein Setzwert $(R_s, X_s)$ verwendet werden.

8. Schutzrelais nach Anspruch 7, **dadurch gekennzeichnet, dass** das polarisierter-Spannungswert-Berechnungsmittel eine Spannung vor vorbestimmten Zyklen einer Spannung normal zu den ersten Spannungen als die dritte Spannung berechnet.

9. Schutzrelais nach Anspruch 1, **dadurch gekennzeichnet, dass**

das erste Filtermittel (1) Abtastdaten $v_m$ und $i_m$ der Spannung $v$ und des Stroms $i$ in dem Leistungssystem in ein digitales Filter eingibt, um Spannungsdaten $v_{sm}$ und Stromdaten $i_{sm}$ auszugeben, und

das zweite Filtermittel (2), in das die Spannungsdaten $v_m$, $i_m$ in ein digitales Filter eingegeben werden, Spannungs-daten $v_{jm}$ und Stromdaten $i_{jm}$ normal zu den Spannungsdaten $v_{sm}$ und Stromdaten $i_{sm}$ ausgibt, ferner mit

einem Ladestromkompensationsberechnungsmittel (16) zum Berechnen einer Menge von Elektrizität, die in $i_{sm} - C \cdot v_{jm}$ definiert ist durch die Stromdaten $i_{sm}$, die Spannungsdaten $v_{jm}$ und einen Setzwert $C_s$ zum Zeitpunkt $t_m$; und

ein Sende- und Empfangsmittel (17) zum Senden einer Ausgabe von dem Ladestromkompensationsberechnungsmittel an einen gegenüberliegenden Anschluss, und wenn die Elektrizitätsmenge an dem gegenüberliegenden Anschluss als B angenommen wird, empfangen eine Elektrizitätsmenge, die definiert ist durch $(i_{sm} - C \cdot v_{jm})B$ an den gegenüberliegenden Anschluss, und wobei

das Betriebsentscheidungsmittel (18) eine Betriebsentscheidung basierend auf den Ausgaben von dem Ladestromkompensationsberechnungsmittel und dem Sende/Empfangs-Mittel gemäß dem folgenden Ausdruck durchführt:

$$//(i_{sm} - C_s \cdot v_{jm}) + (i_{sm} - C_s \cdot v_{jm})B// \geq$$

$$ka \cdot \{//i_{sm} - C_s \cdot v_{jm}// + //(i_{sm} - C_s \cdot v_{jm})B//\} + kb$$

wobei,

$\|am\|$ eine Größe parallel zur Amplitude einer AC Elektrizitätsgröße "a" zum Zeitpunkt $t_m$ darstellt;
ka einen Proportionseinschränkungskoeffizienten darstellt; und
kb einen Minimumempfindlichkeitsstrom darstellt.

**Revendications**

1. Relais de protection pour déterminer s'il existe ou non un point d'erreur d'un système d'alimentation dans une plage prédéterminée, comprenant :

un moyen de filtrage (1, 2) pour saisir des données d'échantillonnage d'une tension et d'un courant dans le système d'alimentation dans un filtre numérique ayant une fonction de transfert prédéterminée et délivrer des premières données de tension et des premières données de courant et des secondes données de tension et des secondes données de courant normales aux premières données de tension et aux premières données de courant, respectivement ;

un moyen de calcul pour le calcul d'une valeur de mesure prédéterminée sur la base des premières données de tension, des premières données de courant, des secondes données de tension et des secondes données de courant, à un premier moment, et des premières données de tension, des premières données de courant, des secondes données de tension et des secondes données de courant à un second moment différent du premier moment ; et

un moyen de décision d'opération pour effectuer une décision d'opération sur la base de la valeur de mesure prédéterminée obtenue par le moyen de calcul ;

dans lequel le moyen de filtrage comprend : un premier moyen de filtrage pour saisir les données d'échantillonnage dans un filtre numérique ayant la première fonction de transfert $f(Z).(1 + k.Z^{-1} + Z^{-2})$ ($Z$ désigne un opérateur de conversion $Z$) de manière à délivrer les premières données de tension et les premières données de courant ; et un second moyen de filtrage pour saisir les données d'échantillonnage dans un filtre numérique ayant la seconde fonction de transfert $f(Z).(1 + Z^{-2})$ ($Z$ désigne un opérateur de conversion $Z$) de manière à délivrer les secondes données de tension et les secondes données de courant.

**2.** Relais de protection selon la revendication 1, **caractérisé en ce que** la valeur de mesure prédéterminée obtenue par le moyen de calcul contient au moins une valeur choisie parmi une valeur de réactance et une valeur ohmique.

**3.** Relais de protection selon la revendication 2, **caractérisé en ce que** le moyen de filtrage (1, 2) comprend :

un premier moyen de filtrage pour saisir les données d'échantillonnage $v_m$ et $i_m$ au premier moment $T_m$ dans un filtre numérique ayant la fonction de transfert $f(Z).(1 + k.Z^{-1}+Z^{-2})$ ($Z$ désigne un opérateur de conversion $Z$) de manière à délivrer des données de tension $v_{sm}$ et des données de courant $i_{sm}$ ; et un second moyen de filtrage (2) pour saisir les données d'échantillonnage $v_m$, $i_m$ au premier moment $T_m$ dans un filtre numérique ayant la transmission $f(Z) . (1 + Z^{-2})$ ($Z$ désigne un opérateur de conversion $Z$) de manière à délivrer des données de tension $v_{jm}$ et des données de courant $i_{jm}$ normales aux données de tension $v_{sm}$ et aux données de courant $i_{sm}$ ; le moyen de calcul calcule une valeur de réactance $X_m$ basée sur :

$$X_m = \frac{- v_{sm} \cdot i_{sm\text{-}p} + i_{sm} \cdot v_{sm\text{-}p}}{- i_{jm} \cdot i_{sm\text{-}p} + i_{jm\text{-}p} \cdot i_{sm}}$$

en utilisant les premières données de tension $v_{sm}$, les premières données de courant $i_{sm}$, les secondes données de tension $v_{jm}$ et les secondes données de courant $i_{jm}$, au premier moment $t_m$, et les premières données de tension $v_{sm\text{-}p}$, les premières données de courant $i_{sm\text{-}p}$, les secondes données de tension $v_{jm\text{-}p}$ et les secondes données de courant $i_{jm\text{-}p}$ au second moment $t_{m\text{-}p}$, et

le moyen de décision d'opération a une section de décision d'opération qui décide de l'opération sur la base de la valeur de réactance $X_m$.

**4.** Relais de protection selon la revendication 3, **caractérisé en ce que** le moyen de décision d'opération décide de l'opération sur la base d'une expression de décision de $X_m \leq X_s$ sur la base de la valeur de réactance $X_m$ et d'une valeur de réglage $X_s$.

**5.** Relais de protection selon la revendication 3, **caractérisé en ce que** le moyen de calcul calcule une valeur ohmique $R_m$ sur la base de :

l'utilisation des premières données de tension $v_{sm}$, des premières données de courant $i_{sm}$, des secondes données de tension $v_{jm}$ et des secondes données de courant $i_{jm}$, au premier moment $t_m$ et des premières données de tension $v_{sm\text{-}p}$, des premières données de courant $i_{sm\text{-}p}$, des secondes données de tension $v_{jm\text{-}p}$ et des secondes données de courant $i_{jm\text{-}p}$ au second moment $t_{m\text{-}p}$, la valeur ohmique $R_m$ est calculée sur la base de :

$$R_m = \frac{- i_{jm} \cdot v_{sm\text{-}p} + v_{sm} \cdot i_{jm\text{-}p}}{- i_{jm} \cdot i_{sm\text{-}p} + i_{jm\text{-}p} \cdot i_{sm}}$$

et

le moyen de décision d'opération décide de l'opération à partir de la valeur de réactance $X_m$ issue du moyen de calcul selon une décision d'expression :

$$(R_m - R_O).(R_m - R_f) + (X_m - X_O).(X_m - X_f) \leq 0$$

où :

$R_O$ (composante ohmique) représente une valeur de réglage mho décalée côté proche ;
$X_O$ (composante de réactance) représente une valeur de réglage mho décalée côté proche ;
$R_F$ (composante ohmique) représente une valeur de réglage mho décalée côté éloigné ; et
$X_F$ (composante de réactance) représente une valeur de réglage mho décalée côté éloigné.

6. Relais de protection selon la revendication 2, **caractérisé en ce que** :

le moyen de filtrage (1, 2) comprend : un premier moyen de filtrage (1) pour saisir les données d'échantillonnage $v_m$ et im au premier moment $T_m$ dans un filtre numérique ayant la fonction de transfert f (Z) . (1 + k.$Z^{-1}$ + $Z^{-2}$) (Z désigne un opérateur de conversion Z) de manière à délivrer des données de tension $v_{sm}$ et des données de courant $i_{sm}$; et un second moyen de filtrage (2) pour saisir les données d'échantillonnage $v_m$ et $i_m$ au premier moment $T_m$ dans un filtre numérique ayant la transmission f(Z).(1 + $Z^{-2}$) (Z désigne un opérateur de conversion Z) de manière à délivrer des données de tension $v_{jm}$ et des données de courant $i_{jm}$ normales aux données de tension $v_{sm}$ et aux données de courant $i_{sm}$; et

le moyen de calcul calcule une valeur ohmique $R_m$ en utilisant les premières et secondes données de tension $v_{sm}$, $v_{jm}$, $v_{sm-p}$, $v_{jm-p}$ et les premières et secondes données de courant $i_{sm}$, $i_{jm}$, $i_{sm-p}$, $i_{jm-p}$ au premier et second moments $T_m$ et $T_{m-p}$, qui sont obtenues par le premier moyen de filtrage (1) et le second moyen dé filtrage (2) ; et le moyen de décision d'opération décide de l'opération sur la base de la valeur ohmique $R_m$ tirée du moyen de calcul.

7. Relais de protection selon la revendication 1, **caractérisé en ce qu'**il comprend en outre :

un moyen de calcul de tension polarisée pour saisir les premières et secondes données de tension et les premières et secondes données de courant, de manière à calculer une troisième tension normale à la première tension ;

dans lequel le moyen de calcul de valeur de tension polarisée calcule une troisième tension $v_{pjm}$ sur la base des premières données de tension $v_{sm}$, des premières données de courant $i_{sm}$, des secondes données de tension $v_{jm}$ et des secondes données de courant $i_{jm}$, et
le moyen de décision d'opération décide de l'opération sur la base de :

$$v_{pjm-p} .\{(R_s.i_{sm} + X_s.i_{jm)} - v_{sm})$$
$$-v_{pjm-p} .\{(R_s.i_{sm-p} + X_s.i_{jm-p}) - v_{sm-p}) > K2$$

en utilisant la troisième tension $v_{pjm}$, la première tension $v_{sm}$, les premières données de courant $i_{sm}$, les secondes données de tension $v_{jm}$, les secondes données de courant $i_{jm}$ au premier moment $t_m$ et les premières données de tension $v_{jm-p}$, les premières données de courant $i_{jm-p}$ au second moment $t_{m-p}$ et une valeur de réglage ($R_s$, $X_s$).

8. Relais de protection selon la revendication 7, **caractérisé en ce que** le moyen de calcul de valeur de tension polarisée calcule une tension avant des cycles prédéterminés d'une tension normale aux premières tensions comme troisième tension.

9. Relais de protection selon la revendication 1, **caractérisé en ce que** :

le premier moyen de filtrage (1) saisit des données d'échantillonnage $v_m$ et $i_m$ de tension v et de courant i du système d'alimentation dans un filtre numérique de manière à délivrer des données de tension $v_{sm}$ et des données de courant $i_{sm}$, et

le second moyen de filtrage (2), dans lequel les données d'échantillonnage $v_m$ et $i_m$ sont saisies dans un filtre numérique délivre des données de tension $v_{jm}$ et des données de courant $i_{jm}$ normales aux données de tension $v_{sm}$ et aux données de courant $i_{sm}$, comprend en outre :

un moyen de calcul de compensation de courant de charge (16) pour calculer la quantité d'électricité définie dans $i_{sm} - C.v_{jm}$ par les données de courant $i_{sm}$, les données de tension $v_{jm}$ et une valeur de réglage $C_s$ à un moment $t_m$ ; et

un moyen de transmission et de réception (17) pour transmettre la sortie du moyen de calcul de compensation de courant de charge à une borne opposée et, lorsque la quantité d'électricité à la borne opposée est supposée être B, recevoir la quantité d'électricité définie par $(i_{sm} - C.v_{jm})B$ à la borne opposée, et dans lequel

le moyen de décision d'opération (18) effectue une décision d'opération sur la base des sorties du moyen de calcul de compensation de courant de charge et du moyen d'émission/réception selon l'expression suivante :

$$// \ (i_{sm} - C_s.v_{jm}) \ + \ (i_{sm} - C_s.v_{jm})B \ // \ \geq$$

$$Ka.\{// \ (i_{sm} - C_s.v_{jm} \ // \ + \ // \ (i_{sm} - C_s.v_{jm})B \ //\} \ + \ kb$$

Où

$\|am\|$ représente une quantité parallèle à l'amplitude de la quantité AC d'électricité « a » au moment $t_m$ ;
ka représente un coefficient de restriction de proportion ; et
kb représente un courant de sensibilité minimale.

## FIG. 1

Frequency characteristic of
reactance measurement value

## FIG. 2

Frequency characteristic of reactance measurement value

$$G = k \cdot \{ \sin(\pi/12)/\sin(k \cdot \pi/12) \} \cdot [\{n+2 \cdot \cos(k \cdot \pi/12)\} / \{n+2 \cdot \cos(\pi/12)\}]$$

$$G(Z) = (1+kZ^{-1}+Z^{-2})/(1-Z^{-2})$$

FIG. 3

FIG. 4

FIG. 5

First digital filter
$f(z) \cdot (1+kZ^{-1}+Z^{-2})$

Second digital filter
$f(z) \cdot (1-Z^{-2})$

Operating restarint quantity calculator

$am=(-Vsm \cdot ism-p+ ism \cdot Vsm-p)$

$bm=(-ijm \cdot ism-p+ ijm-p \cdot ism)$

Operation decision section
$bm \cdot Xs-am \leq 0$

Vm
im
Vsm
ism
Vjm
ijm

FIG. 6

$Xs \cdot ij$

Vs

is

FIG. 9

Vs

is

$Rs \cdot is$

FIG. 7

Vm, im → First digital filter $f(z) \cdot (1+kZ^{-1}+Z^{-2})$ (1)

→ Vsm, ism

Second digital filter $f(z) \cdot (1-Z^{-2})$ (2)

→ Vjm, ijm

Ohm value calculator (7)

$Rm = (-Vsm\text{-}p \cdot ijm + Vsm \cdot ijm\text{-}p) / (-ijm \cdot ism\text{-}p + ijm\text{-}p \cdot ism)$

→ Operation decision section (8) $Rm \leq Rs$

FIG. 8

Vm, im → First digital filter $f(z) \cdot (1+kZ^{-1}+Z^{-2})$ (1)

→ Vsm, ism

Second digital filter $f(z) \cdot (1-Z^{-2})$ (2)

→ Vjm, ijm

Operating restarint quantity calculator (9)

$cm = (-Vsm\text{-}p \cdot ijm + Vsm \cdot ijm\text{-}p)$
$dm = (-ijm \cdot ism\text{-}p + ijm\text{-}p \cdot ism)$

→ Operation decision section (10) $bm \cdot Rs\text{-}cm \leq k1$

FIG. 10

FIG. 12

24

FIG. 11

FIG. 13

FIG. 14

FIG. 15

FIG. 16

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0718949 A